# EUROPEAN PATENT APPLICATION

(11) **EP 2 213 701 A1**
(43) Date of publication of application: **04.08.2010**
(21) Application number: 09151659.1
(22) Date of filing: 29.01.2009
(51) Int. Cl.: C08J 9/00, C08J 9/16, C08J 9/22, C08J 9/232

(54) **Multicoloured heat insulation material**

(71) Applicant: REXPOL S.r.l., 30036 S. Maria di Sala (VE) (IT)
(72) Inventor: Tonello, Romeo, 30036 S.MARIA DI SALA (VE) (IT)
(74) Representative: Vinci, Marcello

(57) **Abstract**

This is a new heat insulating expanded material obtained by the expansion of polystyrene granule pigmented to 100% in weight with at least two different colours, at least one of which a dark colour, with graphite or similar material, and at least one light colour, like light blue, green, yellow, pink, etc. and various shades and combinations of the same. In the preferred solution, the new material contains 50% in weight of dark granules and 50% in weight of light granules. The new material is succesfully used to make, from moulds or cut of blocks, heat insulating components for boilers, tanks in general, buildings.

## Description

The present patent concerns components in expanded polystyrene and in particular it concerns a new type of expanded material obtained from granules of expandable 100% pigmented polystyrene.

The new material has a particular and useful application in the production of sheets or panels in entirely pigmented expanded polystyrene, to make heat insulating cladding, for example internal coverings, external overcladding for buildings or insulated coverings for boilers and tanks in general.

Polystyrene or expanded polystyrene (EPS) is well known, obtained from the treatment of granules or pearls of virgin expanded polystyrene, typically in an originally natural white colour.

Said pearls are mixed in autoclaves with water and pentane, which is diffused inside the granules of polystyrene, by the effect of external pressure applied.

The granule mass thus treated is placed in a chamber, said vapour distribution chamber, to which water vapour at approximately 120-130°C is introduced.

The thermal energy thus administered to the mass of granules provokes the softening of the polymer and the expansion of the granules due to the presence of pentane gas that is boiling.

The expanded polystyrene spheres become attached to each other to form a single body through the sintering procedure, which foresees blowing water vapour at even greater temperatures in sealed chambers, so that the polymer walls of the granules melt and become a monolithic block having the form of the sealed chamber in which it was inserted.

The sealed chambers can have forms of simple parallelepipeds like for the production of EPS blocks, that are subsequently processed, or else shapes preformed for the production of finished products.

The expanded material obtained in this way has a closed cell structure within which air is held. Said structure gives the material reduced thermal conductivity, around 0.04-0.032 W/m K variable as a function of the density of the product.

The material obtained is therefore effectively used as a heat insulator, for example for making cladding layers for roofs, overcladding for buildings, coverings for thermal devices like boilers, etc., or as shockproof material for packaging.

Expanded polystyrene materials coloured in light blue, yellow, gray, black, etc. with 100% of the granules pigmented in a single colour, in order to give the EPS particular aesthetic and mechanical resistance characteristics are well known.

In that regard, it is known that, introducing a certain amount of black pigment in the polymerization phase of the material, for example graphite or similar material, the expandable material obtained has an improved heat conductivity value with respect to normal non-pigmented material.

The expanded material obtained assumes a homogenous coloration whose intensity is directly proportional to the concentration of the pigment added to the mass of granules.

Many manufacturers of expandable material have proposed these new types of high insulation material with varied formulas that are different from one another due to the type of material used. The same expansion systems used for the production of non-pigmented white material are employed for making these products.

Consequently, when the production cycle is changed from pigmented expanded material to non pigmented expanded material, since a complete cleaning of the expansion chambers and the expanded granule storage silos is not possible, an unplanned and irregular production of white and pigmented granules is unavoidable.

The expanded material produced is in fact "contaminated", because it was obtained from the mixing of new non pigmented white granules, put into the resulting mass of previously pigmented granules.

In any case said material maintains the same characteristics of the base product and is used in all those fields in which the chromatic aspect is not influential.

Hybrid solutions are also known, proposed to improve the heat conductivity of the expanded material, obtained from the pre-established and controlled mixing between black pigmented granules and non pigmented white granules.

This mixture has the problem of excessive reflection of incident sunlight and, given the excessive contrast between the mixed black and white pearls, creates a sense of confusion, dizziness and instability for the user compromising his physical equilibrium.

In fact, the contrast between the white particles, non pigmented, with a very high reflection coefficient and the black pigmented particles with a very low reflection coefficient, creates significant visual irritation, especially for operators during handling and particularly during the installation of the panels obtained from this partially pigmented material.

At least two different methodologies for the coloration of granules of expanded material are known.

The first methodology foresees the mass coloration of non pigmented granules, where every granule is completely coloured and does not produce, either before or after the expansion, any uncoloured part.

Thus a homogenous coloured expanded material in its entire volume is obtained, where each granule has a completely coloured external surface and core.

The second methodology foresees the surface coloration of non pigmented granules, where said coloration occurs through the deposition of pigments on the external surface of the granules themselves.

It follows that, after the expansion, these granules have a coloured external surface while the core remains non pigmented, that is, white.

The difference between said two methodologies is immediately visible after cutting the expanded material obtained. Whereas in the case of mass coloration, the material is coloured homogeneously and completely in its entire volume, in the second case cutting reveals a completely coloured surface, but in a non homogenous way.

With careful examination of the cut surface it is in fact immediately noticeable that all the granules have a non pigmented core that is, therefore, white and a pigmented external surface.

Thus, on the whole the expanded material obtained from the two different coloration methodologies is not essentially identical in its appearance since such differences can be noticed in a detailed analysis.

The present patent is a new type of expanded material that resolves the problem of excessive reflection of light, improving working conditions by reducing discomfort for operators, and that simultaneously guarantees optimal heat conductivity.

The invention is an expanded polystyrene material entirely pigmented according to any of the known coloration methodologies, for example mass coloration or surface coloration of granules.

In particular, the new expanded material is pigmented in at least two different colours, one preferably dark and one preferably lighter, and where both in the coloration with dark pigments and in the coloration with lighter pigments it is possible to indifferently apply said two methodologies of coloration.

It is expected that said pigmented granules of expandable material with two or more colours are then suitably mixed, in an ordered or irregular way.

In the preferred solution, at least a part of granules, for example between 10 and 90% in weight, is pigmented with graphite, or a substantially equivalent pigment, while the remaining part of the granules are pigmented with other colours like, for example, light blue, green, yellow, gray, pink and various shades and combinations of the same.

The main task of the present invention is substantially in the fact of guaranteeing improved heat conductivity by means of pigmentation with graphite or equivalent pigments of a part of the granules, and, at the same time, limiting the light reflection effect, that is the discomfort caused to operators during the handling and installation of the panels, pigmenting all the granules so that in the finished product there are no highly reflecting virgin non pigmented white granules.

Thus the contrast between the black and white coloration used in the known expanded materials is also mitigated.

Another important advantage of the present invention lies in that the expanded material obtained in this way is also effectively usable for other applications beyond that of external heat insulating covering for buildings, like for example for the covering of boilers or similar items, where the heat insulating material becomes dirty easily.

The absence of virgin non pigmented white granules in the new material in fact reduces the degree of "dirtiness" visible in the used panel that, being substantially and diffusely coloured, appears less dirty.

Another important advantage of the present invention lies in that it can be carried out using any coloring method.

In particular, in the case of the application of the methodology of mass coloration of granules, there is also the important advantage of obtaining expanded material the coloration of which is maintained homogenous and stable much longer than expanded material obtained with surface coloration of granules. In the latter case the slightest erosion of the surface exposes the non pigmented core of the granules that is white.

These and other purposes, direct and complementary, are attained by the new material in pigmented expanded polystyrene, obtained from the ordered or random mixing of pigmented expandable granules of polystyrene with at least two colours, for example black, like graphite or similar material, light blue, yellow, green, gray, pink and various shades and combinations of the same.

As said, the granules can be pigmented according to any of the known coloration methodologies, for example mass or surface coloration of granules.

It was discovered that the expanded material obtained from granules coloured with the mass coloration methodology offers some advantages with respect to the material obtained from granules colored only on their surface.

The expanded material obtained from mass coloured granules, in fact, with a homogenous and complete coloration, maintains its coloration in a stabler manner over time, since the surface erosion of the most exposed granules does not uncover non pigmented parts of the granule, the granule being completely coloured in all its volume.

Therefore the colouring of the material, executed in the entire mass, is maintained homogenous for longer periods of time in contrast with the expanded material obtained from granules colored only their surface, erosion of which exposes the non coloured core of the granule therefore appearing white. Over time the total coloration of the latter type of material will appear therefore, ever more faded and inhomogeneous, nullifying or reducing in practice the reflecting and insulating properties of the material.

The pigmentation is foreseen to occur, as known by the state of the art, before the expansion of the expanded polystyrene block, from which the panels will be successively obtained with a thermoelectric cutter.

In addition, the waste from the cutting operations of the panels is foreseen to be recovered and therefore valorised, having no white pigmented material and therefore suitable to be profitably used for the production process of the expanded material.

With special grinding machines, these too for example of a type substantially known to the state of the art, said waste is grinded, cleaned of residual dust and re-converted into the state of pure granule to be successively mixed with other virgin granules, for example already pigmented and ready for expansion.

The maximum amount of waste obtained from the cutting operations of pigmented blocks generally does not exceed 4% of the total. The gross size of the cut blocks, in fact, is usually 403 x 102 x 61 cm, equal to a gross volume of 2.5 m³ in contrast with a total obtained volume of 400 x 100 x 60 cm panels, equal to a net volume of 2.4 m³, with a loss of 4%.

Said 4% of already pigmented waste is therefore mixed in pre-established and constant proportions with the remaining 96% of virgin granules pigmented separately, obtaining a punctiform mass with a diffused inhomogeneous colour.

A similar mixing process is also used for the production of moulded components for the heat insulation of boilers.

In fact for that type of insulation it is not desirable to use completely or partially white expanded material because it gets dirty easily.

The new expanded material, instead, does not contain non pigmented white granules and it is therefore particularly suitable for this use since, given that it is substantially coloured, it appears altogether less dirty even after extended use.

The heat conductivity values were experimentally confirmed in some samples of the new material to be lower than those of white material having the same density.

In fact, it was demonstrated experimentally that to obtain the same average heat conductivity coefficient of 0.0032 W/mK relative to pigmented material having a density equal to 20 Kg/m³ white material having a density equal to 35 Kg/m³ should be used.

Heat conductivity measurement tests were particularly conducted on samples of the new material, on a measuring area equal to 0.0625 m², at a drying temperature of (50°±5)°C, while the conditioning environment is maintained at a temperature of (23±2)°C and at a R.H. of (50±5)%. Such experimental tests highlight how the new material has, under such conditions, heat conductivity values even lower than 0.0032 W/mK.

Therefore, with reference to that which was presented above the following claims are made.

## Claims

1. Heat insulating expanded material obtained from the expansion of pigmented polystyrene granule, **characterized in that** 100% in weight of said granules is pigmented with at least two different colours.

2. Heat insulating expanded material, according to claim 1, **characterized in that** said granules are pigmented with surface coloration techniques.

3. Heat insulating expanded material, according to claim 1, **characterized in that** said granules are pigmented with mass coloration techniques.

4. Heat insulating expanded material, according to claim 1, **characterized in that** part of said granules is pigmented with surface coloration techniques and part of said granules is pigmented with mass coloration techniques.

5. Heat insulating expanded material, according to claim 2, 3 or 4, **characterized in that** at least a part of said granules is pigmented with dark colours, while the remaining part is pigmented with light colours, and where said granules pigmented with dark colours are mixed in a random manner or prearranged manner to said granules pigmented with pigments of a colour other than black.

6. Heat insulating expanded material, according to claim 5, **characterized in that** 10-90% in weight of said dark granules is pigmented with graphite or a thermally similar pigment or equivalent.

7. Heat insulating expanded material, according to claim 5, **characterized in that** 10-90% in weight of said light granules is pigmented with one or more light colours, like light blue, green, yellow, pink, brown or any other colour and various shades and combinations of the same.

8. Heat insulating expanded material, according to claim 2, 3, 4 or 5, **characterized in that** it contains 50% in weight of said dark granules and 50% in weight of said light granules.

9. Heat insulating expanded material, according to claim 6 and/or 8, **characterized in that** said light granules are pigmented entirely or partially with light blue or similar colour.

10. Heat insulating expanded material, according to claim 6 and/or 8, **characterized in that** said light granules are pigmented entirely or partially with pink or similar colour.

11. Heat insulating expanded material, according to claim 6 and/or 8, **characterized in that** said light granules are pigmented entirely or partially with yellow or similar colour.

12. Heat insulating expanded material, according to claim 6 and/or 8, **characterized in that** said light granules are pigmented entirely or partially with brown or similar colour.

13. Heat insulating expanded material, according to claim 6 and/or 8, **characterized in that** said light granules are pigmented entirely or partially with green or similar colour.

14. Heat insulating expanded material, according to one or more of the preceding claims, **characterized in that** it contains entirely pigmented scrap coming from preceding expansions and processing in suitable percentages.

15. Panels obtained from the cut of blocks in heat insulating expanded material or through a moulding process according to one or more of the preceding claims, **characterized in that** they are used as heat insulation for buildings.
